# EUROPÄISCHE PATENTSCHRIFT

(11) **EP 0 317 860 B1**
(45) Veröffentlichungstag und Bekanntmachung des Hinweises auf die Patenterteilung: **10.02.1993**
(21) Anmeldenummer: 88118926.0
(22) Anmeldetag: 14.11.1988
(51) Int. Cl.: C07C 69/54, C07C 67/08, C09J 4/00

(54) **Herstellung von monoolefinisch ungesättigten, eine Carboxylgruppe aufweisenden, Versaticsäureestern und deren Verwendung**
Preparation of monoolefinically unsaturated versatic-acid esters comprising one carboxylic group, and their use
Préparation d'esters d'acide versatique monodéfiniques insaturés comprenant un groupe carboxylique et leur utilisation

(30) Priorität: 21.11.1987 DE 3739542
(43) Veröffentlichungstag der Anmeldung: 31.05.1989
(73) Patentinhaber: BASF Aktiengesellschaft, 67063 Ludwigshafen (DE)
(72) Erfinder: Schulz, Guenther, Dr., D-6702 Bad Duerkheim (DE); Druschke, Wolfgang, Dr., D-6716 Dirmstein (DE); Jaeger, Helmut, D-6719 Bobenheim (DE)

(56) Entgegenhaltungen:
- EP-A- 0 210 607
- EP-A- 0 230 329

## Beschreibung

Monoversaticsäureester des 1,3-Dihydroxypropyl-2-acrylats und des 2,3-Dihydroxypropyl-1-acrylats und Gemische dieser Verbindungen sind bekannt. Sie können in an sich üblicher Weise durch Verestern der Dihydroxypropylacrylsäureester mit der äquimolaren Menge Versaticsäure in Gegenwart der üblichen Veresterungskatalysatoren hergestellt werden. Derartige Hydroxylgruppen aufweisende, monoolefinisch ungesättigte Versaticsäureester wurden schon für die Herstellung strahlenhärtbarer selbsthaftender Überzüge bei dem Verfahren des europäischen Patentes 0 088 300 eingesetzt, und dabei besonders gute Schälfestigkeiten und Scherfestigkeiten der Verklebungen erzielt.

Es wurde nun gefunden, daß man Verbindungen der allgemeinen Formeln 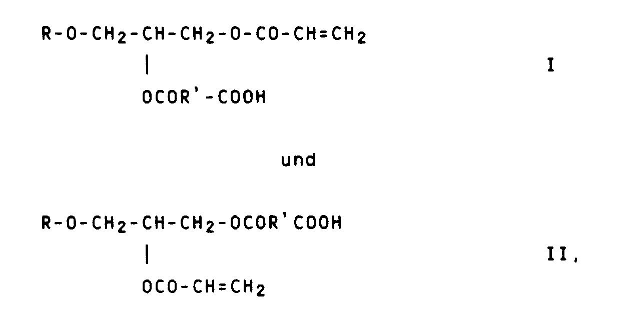
in denen R für den Versaticsäurerest und R′ für einen gegebenenfalls durch Alkylgruppen substituierten 4 bis 5 C-Atome enthaltenden geradkettigen Alkylenrest stehen, herstellen kann, indem man Versaticsäureester des 1,3-Dihydroxypropyl-2-acrylats bzw. des 2,3-Dihydroxypropyl-1-acrylats mit äquimolaren Mengen von gesättigten oder monoolefinisch ungesättigten cyclischen Dicarbonsäureanhydriden mit 4 bis 5 C-Atomen und einem Sauerstoffatom im Ring bei Temperaturen von 50 bis 150°C in Gegenwart üblicher Veresterungskatalysatoren umsetzt. Bei dem neuen Verfahren können mit Vorteil auch Gemische der Versaticsäureester des 1,3-Dihydroxy-2-acrylats und des 2,3-Dihydroxypropyl-1-acrylats eingesetzt werden. Als cyclische Dicarbonsäureanhydride kommen solche von gesättigten und von monoolefinisch ungesättigten Dicarbonsäuren in Frage, z. B. Maleinsäureanhydrid, Bernsteinsäureanhydrid, mono- und dialkylsubstituierte Malein- und Bernsteinsäureanhydride.

Bei der Umsetzung werden die Reaktanden in äquimolaren Mengen, vorzugsweise bei Temperaturen von 70 bis 95°C, in Gegenwart üblicher Veresterungskatalysatoren umgesetzt. Beispiele für derartige Veresterungskatalysatoren sind vor allem p-Dimethylaminopyridin, N-Methylimidazol, N-Methylmorpholin und p-Pyrrolidinopyridin.

Derartige Veresterungskatalysatoren werden in den üblichen Mengen, die meist 0,1 bis 5, insbesondere 0,5 bis 2 Gew.%, bezogen auf die Summe der Gewichte der Reaktanden, eingesetzt. Die erfindungsgemäße Umsetzung wird im allgemeinen ohne Zusatz von Lösungsmitteln durchgeführt, doch können auch Lösungsmittel von der Art des Ethylacetats, Butylacetats, Acetons oder Toluols in Mengen von meist 50 bis 200 Gew.%, bezogen auf die Summe der Gewichte der Reaktanden, mitverwendet werden. Werden derartige Lösungsmittel mitverwendet, so können sie nach erfolgter Umsetzung ggf. unter vermindertem Druck leicht abgedampft werden.

Die Verbindungen der allgemeinen Formeln I und II sind neu. Sie können mit besonderem Vorteil als Reaktivverdünner in strahlungshärtbaren Haftklebern eingesetzt werden, wobei ihre Menge häufig zwischen 10 und 80, inbesondere zwischen 20 und 70 Gew.%, bezogen auf das Gesamtgewicht des strahlungshärtbaren Haftklebers beträgt. Als weitere Komponente enthalten derartige strahlungshärtbare Haftkleber bzw. strahlungshärtbare Mischungen zur Herstellung von Haftklebern mindestens ein reaktives oligomeres Polyester-(meth)acrylat und/oder Polyurethan-(meth)acrylat und/oder Polymere mit einer Glastemperatur unter 0°C und eines K-Werts von 20 bis 80. Oligomere Polyester-(meth)acrylate haben meist Molekulargewichte von 200 bis 50 000, bevorzugt 500 bis 20 000.

Geeignete Polyurethan-(meth)acrylate haben z. B. Molekulargewichte von 500 bis 100 000 und können durch Umsetzung von (a) Diisocyanaten mit (b) 20 bis 99 Äquivalent %, bezogen auf (a) Polyesterolen und/oder Polyetherolen, (c) 0 bis 60 Äquivalent % bezogen auf (a) Diolen mit 2 bis 50 C-Atomen, (d) Hydroxyallyl(meth)acrylaten mit 2 bis 20 C-Atomen in den Alkylresten und (e) Monohydroxyalkylcarbonsäuren mit 2 bis 90 Gew.%, bezogen auf die Gesamtmenge der Reaktanden an Monovinylverbindungen hergestellt sein, wobei die Summe der Mengen der Komponenten (b) bis (e) hinsichtlich ihrer OH-Gruppen der Menge der Komponente (a) äquivalent ist, die Menge der Komponente (d) und (e) zusammen 1 bis 50 Äquivalent %, bezogen auf die Komponente (a) und das Äquivalentverhältnis der Komponente (d) von der Komponente (e) 1:9 bis 9:1 beträgt.

Geeignete Polymere mit einer Glastemperatur unter 0°C können in an sich üblicher Weise unter Verwendung radikalischer Initiatoren in Emulsion, Suspension, in der Schmelze oder vorzugsweise in Lösung durch Polymerisation hergestellt sein. Geeignet sind beispielsweise Polymerisate oder Mischpolymerisate aus monoolefinisch ungesättigten Carbonsäureestern, wie geradkettigen oder verzweigten, 1- bis 12-C-Atome in den Alkylgruppen enthaltenden Estern der Acryl- und Methacrylsäure, wie Methyl-, Ethyl-, Propyl-, Butyl-, Pentyl-, Hexyl-, 2-Ethylhexy-, Octyl-, Decyl- und Dodecylacrylat und -methacrylat sowie von Phenylestern wie Vinylacetat, Vinylpropionat, Vinylethylhexanoat, Vinylversatat und Vinyllaurat. Neben den Carbonsäureestern können derartige Polymerisate auch andere olefinisch ungesättigte Monomere, z.B. meist 3 bis 5 C-Atome aufweisende Mono- oder Dicarbonsäuren, wie Acrylsäure, Methacrylsäure, Malein-, Fumar-, Itacon- oder Crotonsäure sowie saure oder neutrale Alkylester der ungesättigten Dicarbonsäuren einpolymerisiert enthalten. Weitere Comonomere sind beispielsweise Styrol, Acryl- und Methacrylnitril sowie ferner Vinylhalogenide, wie Vinylchlorid und Vinylidenchlorid, 1,3-Diene wie Butadien und Alkylester, α,β-monoolefinisch ungesättigte Dicarbonsäuren, wie Maleinsäurediethyl- und Dibutylester.

Weiterhin können derartige strahlungshärtbare Mischungen übliche klebrigmachende Harz (Tackifier) in Mengen von 0 bis 60, vorzugsweise von 5 bis 40 Gew.%, bezogen auf die strahlungshärtbaren Haftkleber, enthalten. Beispiele hierfür sind Terpenharze, Balsamharze, Kolophoniumharze, Kolophonium, hydriertes Kolophonium, Ester des Kolophoniums oder hydrierten Kolophoniums, wie der Glycerinester, der Pentaeester, der Ethylenglykolester, Diethylenglykolester, Methylester oder der Propylester des (hydrierten) Kolophoniums.

Außerdem können derartige Gemische thermische Stabilisatoren in den üblichen Mengen beispielsweise 2,6-Di-tert.-butyl-p-kresol, Hydrochinon, Hydrochinonmethylether oder Phenothiazin enthalten.

Schließlich enthalten derartige Gemische im allgemeinen Photoinitiatoren von der Art des Bensildimethylketols.

Weitere Beispiele für geeignete Photoinitiatoren sind Acylphosphinoxide oder Benzoinehter.

Die in den folgenden Beispiele angegebenen Teile und Prozente beziehen sich, wenn nicht anderes angegeben, auf das Gewicht. Die darin angegebenen K-Werte sind nach DIN 53726 bestimmt.

### Beispiel

19,5 Teile eines Versaticsäuremonoestergemisches von 2,3-Dihydroxypropyl-1-acrylat und 1,3-Dihydroxypropyl-2-acrylat werden mit 0,2 Teilen N-Methylimidazol und 5 Teilen Bernsteinsäureanhydrid gemischt und das Gemisch 5 Stunden bei 90°C gerührt. Man erhält als Reaktionsprodukt ein Gemisch der entsprechenden Bernsteinsäuremonoester einer Säurezahl von 131 mg/g und einer Viskosität von 6,5 Pas bei 23°C.

Zur Prüfung des Produkts nach dem Ausführungsbeispiel als Reaktivverdünner für strahlungshärtbare Haftkleber werden verschiedene Gemische hergestellt und deren Klebeeigenschaften durch einen Schältest bestimmt. Dabei werden Polyesterfolien mit dem Gemischen derart beschichtet, daß der Überzug eine Dicke von 25 µm (entsprechend einem Auftrag von 25 g je m²) aufweist. Der auf dem Träger aufgebrachte Überzug wird mit Elektronenstrahlen in einer Elektro-Curtain-Anlage bestrahlt. Von den beschichteten und bestrahlten Folien werden jeweils 2 cm breite Prüfstreifen verwendet. Zur Prüfung der Schälfestigkeit werden dann die Prüfstreifen auf eine verchromte Platte aufgeklebt und parallel zur Klebeschicht, d.h. unter einem Winkel von 180°, abgeschält und die dafür notwendige Kraft gemessen. Die Abzugsgeschwindigkeit beträgt 300 mm/min und die Messung wird 24 Stunden nach der Verklebung durchgeführt.

### Haftklebergemisch (a)

200 Teile einer 50 %igen Lösung eines Polyurethanacrylats des K-Werts 37,4 in Ethylacetat werden mit 100 Teilen des Produkts des Beispiels gemischt und die Schälfestigkeit eines daraus, wie oben beschrieben, hergestellten Hartkleberauftrags bestimmt. Die dabei gemessene Schälfestigkeit ist in der Tabelle aufgeführt.

### Das Polyurethanacrylat wird wie folgt hergestellt:

Zu einer Lösung von 400 Teilen eines aus Adipinsäure und Butan-, Pentan- sowie Hexandiol aufgebauten Polyesterols mit einem mittleren Molgewicht von 2 000 g/Mol, 6,8 Teilen Butandiol und 96 Teilen Butandiolmonoacrylat sowie 0,1 Teilen Hydrochinon. In 500 Teilen Ethylacetat werden bei 60°C 73,2 Teile Isophorondiisocyanat zugegeben und 10 Stunden bei dieser Temperatur gerührt.

### Hafklebergemisch (b)

100 Teile eines Polyurethanacrylats des K-Werts 45,9 werden mit 100 Teilen des Produkts nach dem Beispiel gemischt und die Schälfestigkeit eines mit diesem Gemisch hergestellten Haftkleberauftrags, wie oben beschrieben, bestimmt. Die dabei gemessene Schälfestigkeit ist in der Tabelle angegeben.

Das Polyurethanacrylat wird analog zu (a) hergestellt, jedoch werden auf 400 Teile des dort beschriebenen Polyesterols 14 Teile Hexandiol, 4,8 Teile Butandiolmonoacrylat und 79,3 Teile Isophorondiisocyanat eingesetzt.

### Haftkleber (c)

50 Teile eines aus 60 Teilen 2-Ethylhexylacrylat, 38 Teilen Vinylacetat und 2 Teilen Acrylsäure durch Lösungspolymerisation in an sich üblicher Weise hergestellten Copolymerisats des K-Werts 60 und einer Glastemperatur von -30°C werden mit 50 Teilen des Produkts des Beispiels gemischt. Die Schälfestigkeit eines mit dem Gemisch, wie oben beschrieben, erhaltenen Haftkleberauftrag wird bestimmt. Sie ist in der Tabelle angegeben.

### Vergleichsversuche

(a′) Man arbeitet wie bei Haftklebergemisch (a) beschrieben, verwendet aber anstelle der 100 Teile des nach dem Beispiel erhaltenen Reaktivverdünners 100 Teile des Versaticsäuremonoestergemisches von 2,3-Dihydroxypropyl-1-acrylat und 1,3-Dihydroxypropyl-2-acrylat. Die mit dem erhaltenen Gemisch erhaltene Schälfestigkeit ist in der Tabelle angegeben.
(b′) Man arbeitet wie unter (b) angegeben, verwendet aber anstelle der 100 Teile des Reaktivverdünners des Beispiels 100 Teile des Versaticsäuremonoestergemisches von 2,3-Dihydroxypropyl-1-acrylat und 1,3-Dihydroxypropyl-2-acrylat. Die damit erhaltene Schälfestigkeit ist in der Tabelle angegeben.
(c′) Man arbeitet wie unter (c) angegeben, verwendet aber anstelle der 50 Teile des Reaktivverdünners nach dem Beispiel 50 Teile des Versaticsäuremonoestergemisches von 2,3-Dihydroxypropyl-1-acrylat und 1,3-Dihydroxypropyl-2-acrylat. Die damit erhaltene Schälfestigkeit ist in der Tabelle angegeben.

**Tabelle**

| Haftkleber | Schälfestigkeit (nach 24 Stunden in N/cm) |
|---|---|
| a | 4,7 |
| b | 5,8 |
| c | 5,1 |
| a′ | 1,8 |
| b′ | 2,9 |
| c′ | 2,3 |

## Patentansprüche

1. Verbindungen der allgemeinen Formeln 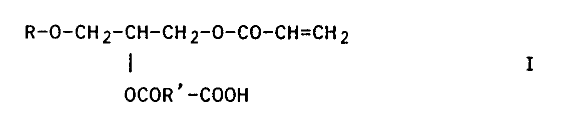 und 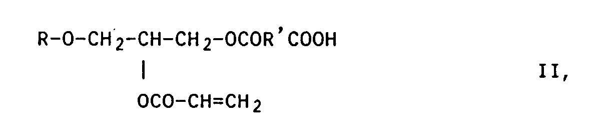 in denen R für den Versaticsäurerest und R' für einen gegebenenfalls durch Alkylgruppen substituierten 4 bis 5 C-Atome enthaltenden geradkettigen Alkylenrest stehen.

2. Verfahren zur Herstellung von Verbindungen der allgemeinen Formeln I und II, dadurch gekennzeichnet, daß man Versaticsäureester des 1,3-Dihydroxypropyl-2-acrylats bzw. des 2,3-Dihydroxypropyl-1-acrylats mit äquimolaren Mengen von gesättigten oder monoolefinisch ungesättigten cyclischen Dicarbonsäureanhydriden mit 4- bis 5-C-Atomen und ein Sauerstoffatom im Ring bei Temperaturen von 50 bis 150°C in Gegenwart üblicher Veresterungskatalysatoren umsetzt.

3. Verfahren nach Anspruch 2, dadurch gekennzeichnet, daß man Gemische der Versaticsäureester des 1,3-Dihydroxy-2-acrylats und des 2,3-Dihydroxypropyl-1-acrylats in der Veresterungsreaktion einsetzt.

4. Verwendung der Verbindungen der allgemeinen Formeln I und II als Reaktivverdünner in strahlungshärtbaren Haftklebern.

## Claims

1. Compounds of the general formulae 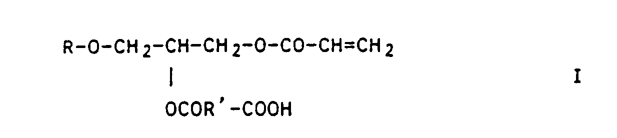 and 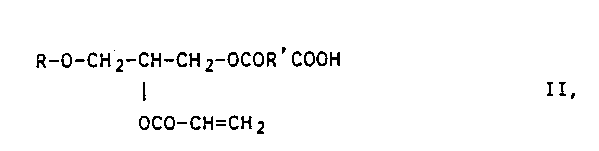 where R is the Versatic acid radical and R' is unsubstituted or alkyl-substituted straight-chain alkylene of 4 or 5 carbon atoms.

2. A process for preparing compounds of the general formulae I and II, which comprises reacting Versatic esters of 1,3-dihydroxy-2-propyl acrylate or of 2,3-dihydroxy-1-propyl acrylate with equimolar amounts of saturated or monoolefinically unsaturated cyclic dicarboxylic anhydrides having 4 or 5 carbon atoms and an oxygen atom in the ring at from 50 to 150°C in the presence of customary esterification catalysts.

3. A process as claimed in claim 2, wherein a mixture of the Versatic esters of 1,3-dihydroxy-2-propyl acrylate and 2,3-dihydroxy-1-propyl acrylate is used in the esterification reaction.

4. Use of the compounds of the general formulae I and II as reactive diluent in a radiation-curable contact adhesive.

## Revendications

1. Composés des formules générales 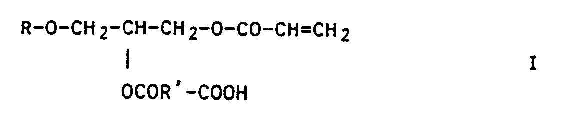 et 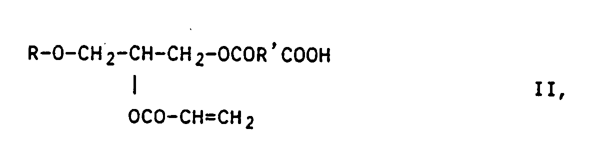 dans lesquelles R représente le reste de l'acide versatique et R' représente un radical alkylène à chaîne linéaire, contenant 4 ou 5 atomes de carbone, éventuellement substitué par des radicaux alkyle.

2. Procédé de préparation de composés des formules générales I et II, caractérisé en ce que l'on fait réagir des esters de l'acide versatique du 2-acrylate de 1,3-dihydroxypropyle ou du 1-acrylate de 2,3-dihydroxypropyle avec des proportions équimolaires d'anhydrides d'acides dicarboxyliques cycliques, monooléfiniquement insaturés ou saturés, comportant 4 ou 5 atomes de carbone et un atome d'oxygène dans le cycle, à des températures de 50 à 150°C et en présence de catalyseurs d'estérification usuels.

3. Procédé suivant la revendication 2, caractérisé en ce que l'on utilise des mélanges des esters de l'acide versatique du 2-acrylate de 1,3-dihydroxypropyle et du 1-acrylate de 2,3-dihydroxypropyle au cours de la réaction d'estérification.

4. Utilisation des composés des formules générales I et II à titre de diluants réactifs dans des colles de contact durcissables par irradiation.
